(19) Europäisches Patentamt
European Patent Office
Office européen des brevets

(11) **EP 1 028 859 B1**

(12) **EUROPEAN PATENT SPECIFICATION**

(45) Date of publication and mention
of the grant of the patent:
**26.06.2002 Bulletin 2002/26**

(51) Int Cl.⁷: **B60C 15/06**, B60C 3/04

(86) International application number:
**PCT/US97/05542**

(21) Application number: **97917842.3**

(22) Date of filing: **03.04.1997**

(87) International publication number:
**WO 98/43836 (08.10.1998 Gazette 1998/40)**

(54) **PLY PATH CONTROLLED BY PRECURED APEX**

VON VOR-VULKANISIERTER WULSTFÜLLUNG KONTROLLIERTE KARKASSENLINIE

TRAJECTOIRE DE PLIS REGULEE AU MOYEN D'UN BOURRAGE SUR TRINGLE PRECUIT

(84) Designated Contracting States:
**AT DE ES FR GB IT NL**
Designated Extension States:
**SI**

(43) Date of publication of application:
**23.08.2000 Bulletin 2000/34**

(73) Proprietor: **THE GOODYEAR TIRE & RUBBER COMPANY**
**Akron, Ohio 44316-0001 (US)**

(72) Inventors:
• **VANNAN, Frederick, Forbes**
**Clinton, OH 44216 (US)**
• **CAPPELLI, Matthew, Ray**
**Canal Fulton, OH 44614 (US)**
• **GOLDSTEIN, Arthur, Allen**
**Mayfield Village, OH 44143 (US)**
• **TUBB, Gary, Edwin**
**Copley, OH 44321 (US)**

(74) Representative: **Leitz, Paul**
**Goodyear Technical Center,**
**Patent Department,**
**Avenue Gordon Smith**
**7750 Colmar-Berg (LU)**

(56) References cited:
EP-A- 0 013 194        EP-A- 0 653 318
BE-A- 640 777          FR-A- 2 224 313
US-A- 5 536 348

• PATENT ABSTRACTS OF JAPAN vol. 096, no. 006, 28 June 1996 & JP 08 048116 A (BRIDGESTONE CORP), 20 February 1996,

## Description

### Technical Field

This invention relates to a radial ply pneumatic tire mounted on a rim, the tire having a predetermined ply cord path.

### Background Art

Tire engineers have historically established the contours of tires by building a mold having a predetermined contour, placing green or unvulcanized tires with predetermined amounts of rubber on either side of the reinforcing plies into the mold, expanding the tire casing against the mold using an inflatable bladder and then applying heat and pressure to cure the tire.

The mold is built with annular bead forming rings that form the contour of the bead portion 200 of the tire 100. These bead rings have a molding surface that generally approximates the contour of the rim upon which the tire 100 will fit.

The ply 210 is anchored to the bead cores 200 and conventionally in prior art tires 100 has a working ply path between the bead core 200 and the belt packages 140. At the lower portion of the tire the bead core and the rim flange limits the amount of movement the ply cords 210 can take. At the upper portion of the tire circumferentially extending belt package limits the radial growth of the ply. At a location just under the belt lateral edges 150 the ply cords when tensioned take a contour that approximates a single radius of curvature $R_{UP}$. This single radius of curvature $R_{UP}$ is commonly called the "neutral ply line."

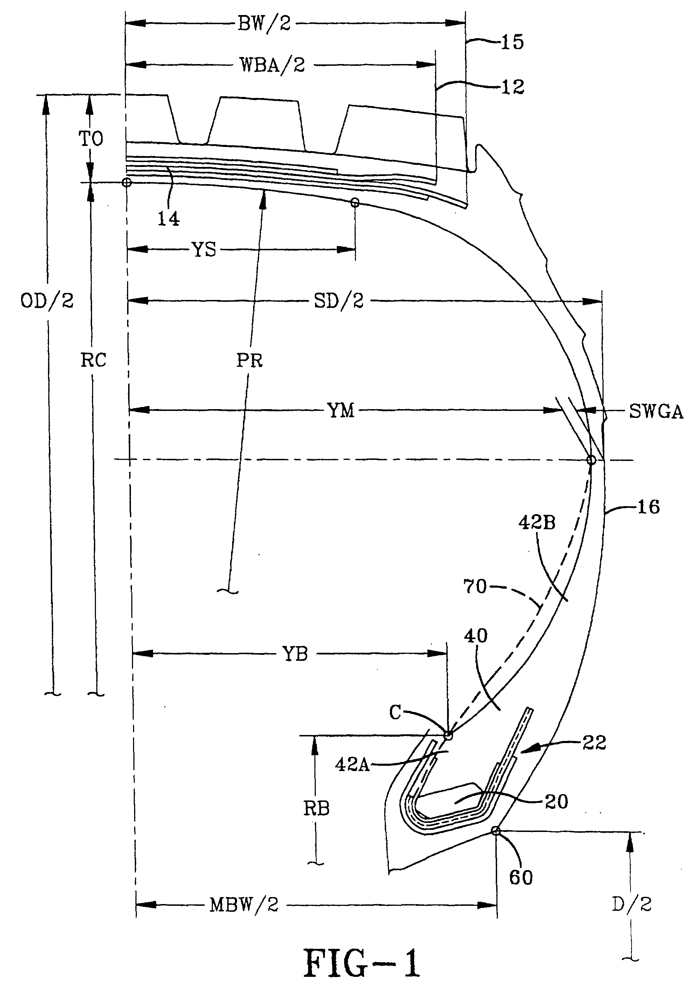

This single radius contour can only be held to a point as shown in Fig. 1. If the contour defined by $R_{UP}$ is maintained further a very steep curve is achieved that is axially extending at a location well above the rim flange of a conventional truck tire rim.

Ideally, one would like to optimize the ply cord path. One recent disclosure entitled "Tire With Reduce Bead Mass," is disclosed in U.S. Patent 5,526,863. It is suggested that a reduced bead mass of as much as 15% can be achieved by using a small apex with an elongated constant thickness outer component and a large axially outer filler component. The 5,526,863 patent teaches adding a massive amount of rubber axially outward of the ply turnup. This in combination with the placement of the ply turnup axially inward adjacent the radially outer location of the rim flange effectively enables ply turnup to be moved toward the lower ply curvature above the rim flange such that the gap between the ply turnup and the ply path is a constant T from a distance F1 to below a location F2. This prior art tire had a slight improvement or reduction in tire mass with a corresponding reduction in rolling resistance. The ride performance was either better or worse dependent on the overall physical embodiment tested. Radial and cornering stiffness degraded with the lower dynamic spring rate. High speed capability was also worsened. This inventor seemed to believe that the lighter weight benefits outweighed the durability or performance reductions.

One inherent problem in the above-mentioned tires of the prior art is that the uncured rubber flows during vulcanization making the control of the ply path rather unpredictable.

A second and equally important problem is that the lower ply path must be altered to effectively anchor itself to the bead core. This is particularly true of conventional flange type rims. Those skilled in the art conventionally build a spline fit between the upper sidewall neutral contour and the lower sidewall. The resultant spline occupies the region between the maximum section width and the location radially near the bead flange. The spline fit has a very large radius of curvature often approximating an almost linear segment. In this portion of the ply, the ply path deviates from the neutral ply path, shear stresses develop that can generate heat and degrade the rolling resistance and durability of the tire. The tire of the present invention has a consistent ply path in the lower sidewall that has very low stresses. This lower ply path contour is controlled by a unique precured contoured apex that can minimize or even eliminate the use of a spline fit.

US-A- 553 648 (corresponding to EP-A- 750 984) discloses a tire having a precured tread for mounting to an unvulcanized or a vulcanized tire casing. The bead filler portion may be precured and have its inner curvature defined by a convex and a concave surface.

### Description of the Invention.

### Summary of the Invention.

The invention provides a tire mounted on a rim of a vehicle as defined in the appended claims.

   **Definitions.** "Aspect ratio" of the tire means the ratio of its section height (SH) to its section width (SW);

"Axial" and "axially" means lines or directions that are parallel to the axis of rotation of the tire;

"Bead" means that part of the tire comprising an annular tensile member wrapped by ply cords and shaped, with or without other reinforcement elements such as flippers, chippers, apexes, toe guards and chafers, to fit the design rim;

"Belt reinforcing structure" means at least two layers of plies of parallel cords, woven or unwoven, underlying the tread, unanchored to the bead, and having both left and right cord angles in the range from 17 degrees to 27 degrees with respect to the equatorial plane of the tire;

"Carcass" means the tire structure apart from the belt structure, tread, under tread, and sidewall rubber over the plies, but including the beads;

"Circumferential" means lines or directions extending along the perimeter of the surface of the annular tread perpendicular to the axial direction;

"Chafers" refers to narrow strips of material placed around the outside of the bead to protect cord plies from the rim, distribute flexing above the rim, and to seal the tire;

"Chippers" means a reinforcement structure located in the bead portion of the tire;

"Cord" means one of the reinforcement strands of which the plies in the tire are comprised;

"Design rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization - Standards Manual and the term design rim means the same as the standard measurement rims. In Japan, the standard organization is The Japan Automobile Tire Manufacturer's Association.

"Equatorial plane (EP)" means the plane perpendicular to the tire's axis of rotation and passing through the center of its tread;

"Footprint" means the contact patch or area of contact of the tire tread with a flat surface at zero speed and under normal load and pressure;

"Innerliner" means the layer or layers of elastomer or other material that form the inside surface of a tubeless tire and that contain the inflating fluid within the tire;

"Net-to-gross ratio" means the ratio of the tire tread rubber that makes contact with the road surface while in the footprint, divided by the area of the tread in the footprint, including non-contacting portions such as grooves;

"Normal rim diameter" means the average diameter of the rim flange at the location where the bead portion of the tire seats;

"Normal inflation pressure" refers to the specific design inflation pressure and load assigned by the appropriate standards organization for the service condition for the tire;

"Normal load" refers to the specific design inflation pressure and load assigned by the appropriate standards organization for the service condition for the tire;

"Ply" means a continuous layer of rubber-coated parallel cords;

"Radial" and "radially" means directions radially toward or away from the axis of rotation of the tire;

"Radial-ply tire" means belted or circumferentially-restricted pneumatic tire in which the ply cords which extend from the bead to bead are laid at cord angles between 65 degrees and 90 degrees with respect to the equatorial plane of the tire;

"Section height" (SH) means the radial distance from the nominal rim diameter to the outer diameter of the tire at its equatorial plane; and,

"Section width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

**Brief Description of Drawings**

The invention may take physical form in certain parts and arrangement of parts a preferred and alternative embodiments of which will be described in detail in this specification and illustrated in the accompanying drawing which form a part hereof and wherein.

Fig. 1 is a schematic view of half of a cross section of a tire and its resultant geometry as discussed herein.

Fig. 2 is an enlarged schematic view of the lower bead portion of the tire of Fig. 1 and its resultant geometry.

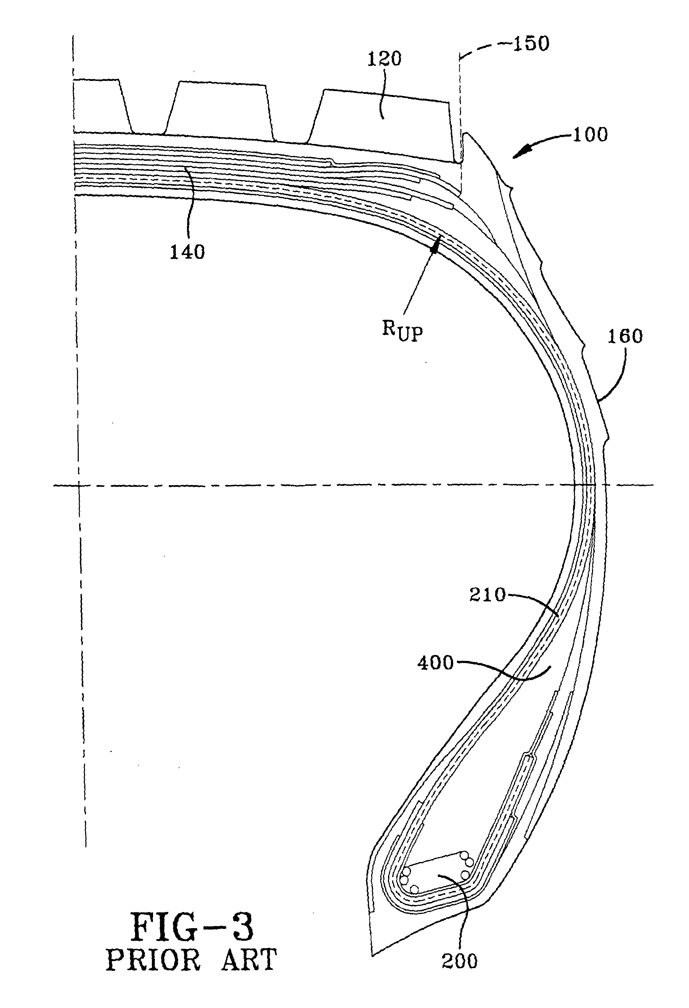

Fig. 3 is a cross sectional view of half of a prior art tire.

Fig. 4 is a cross sectional view of a neutral contour ply line in a theoretical tire as described by Purdy.

Fig. 5 is a cross section of a bead portion of a theoretical tire as disclosed by Purdy.

Fig. 6 is a cross sectional view of one-half of a tire made in accordance to the invention.

Fig. 7 is a cross sectional view of one-half of a second embodiment tire made in accordance to the invention.

Figs. 8A and 8B are enlarged views of the cross sections of the precured apex bead core assemblies according to the invention.

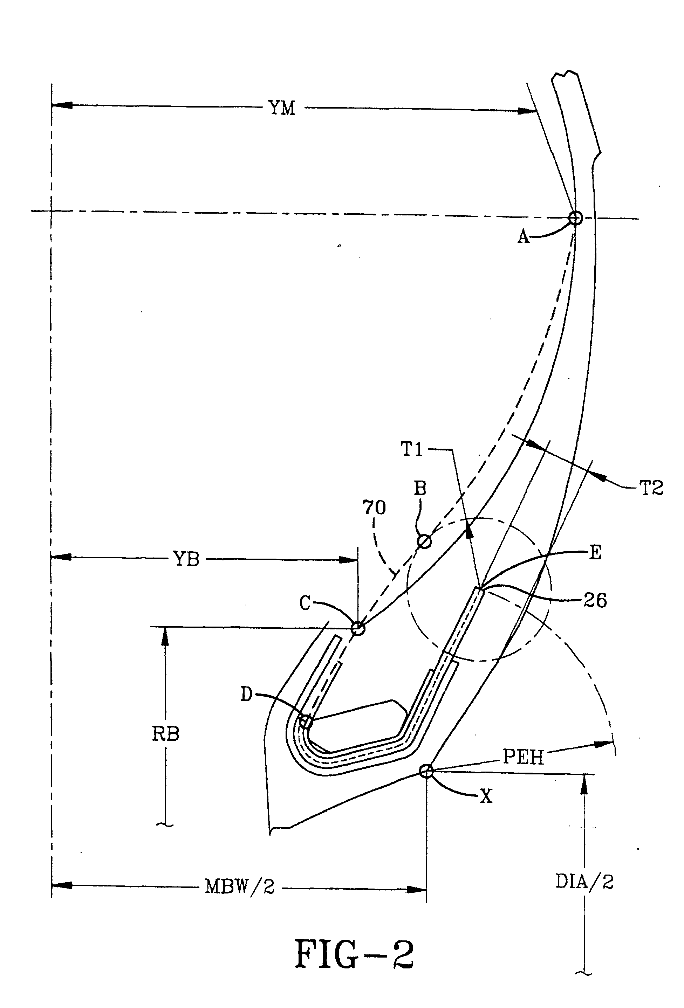

**Detailed Description of the Invention.** In order to insure a complete and thorough understanding of the invention and an exemplary method of practicing this invention a detailed description of how one of ordinary skill can determine or develop a ply line for a radial ply pneumatic tire is discussed. For ease of understanding Figs. 1 and 2 disclose abbreviations or initials that facilitate the understanding, the initials being similarly referred to in the text that follows. For a given tire 10 of a particular size, it is assumed at the outset that mold (OD), section diameter (SD) and molded base width (MBW) are known. It is also assumed that for the given tire application, the tread nonskid (NSK), undertread (UT), belt gages (BGA), and top ply coat (TPC) gage have been determined, and the mold ring sharp diameter and bead profile specifications are known, as well as the bead diameter.

The following gages and dimensions are also known from successful practice in prior art, viz: sidewall gage (SWGA), gum chafer gage, chipper gage, flipper gage, ply ending height (PEH), ply wire end-to-mold gage (T2), and ply wire end-to-ply gage (T1). It is assumed that tread width, tread radius and belt width have been determined from methods in standard practice. There are several methods to determine TAW. One such method is to use molded base width +/- 5 %.

Once the TAW is determined, the tread radius may be determined from the following construction: An angled line is drawn at -5 degrees through the mold OD point. The intersection of this line and a vertical line at TAW forms a point that may be reflected about the vertical axis. The tread radius is a circle through these three points.

The belts are then positioned concentric to the tread radius. A rule of thumb for max belt width is such that gage-to-mold at the widest belt is .55 (steer, trail), .60 (drive). It is also assumed here that belt step-offs are known and that an extruded wedge is placed between the working belts.

It is assumed that engineering calculations will be performed to verify required bead size, ply wire diameter and belt wire diameter. The calculations are normally done upon determination of the neutral contour line.

NEUTRAL CONTOUR LINE CAN BE ESTABLISHED AS FOLLOWS:

Five input parameters are needed to specify a neutral contour ply line. These parameters are RC, YM, RB, YB, and PR (shown in Fig. 1). The parameters are sufficient to define a well known mathematical curve from point YS to point (RB,YB).

Purdy, J. F., "Mathematics Underlying the Design of Pneumatic Tires," Hiney Printing, 1963, teaches a theory or cord tension defining the neutral contour line for any tire. This neutral contour is as shown in Fig. 4.

Purdy states in Chapter VI of his book "Bead Tension" that "In chapters I & II the cord tension was defined for any tire as

$$t = \frac{-\pi\, \rho\, (\rho_m{}^2 - \rho^2)}{N \sin \alpha \sin \phi} \qquad \qquad 1)$$

and several terms of the equation were also defined. In the present case let N be the total number of cords in the v plies of a tire and p be the inflation pressure.

The component of cord tension tangent to the tire contour and in a radial plane is

$$t \sin \alpha$$

and its component in the plane of any great circle of radius p is

$$t \sin \alpha \cos \phi \qquad \qquad 2)$$

This component of tension exerted by each cord of the tire results in a uniformly distributed force around a ring of radius P such as the steel ring to which the plies of a tire are anchored and which serves as a means of holding a tire-on a wheel or rim. If n equals the number of tire cords per inch counted normally to the cord path, then over one inch of circumference of the ring of radius $\rho$ there are n sin $\alpha$ cords in each ply, so that for v plies

$$t\, n\, v\, \rho\, \sin^2 \alpha \cos \phi = T_b \qquad \qquad 3)$$

where $T_b$ is the tension in the steel anchor ring or bead as it is called.

From 1) we may substitute the value of t and have

$$T_b = \frac{p}{2} \frac{\rho_m{}^2 - \rho^2) \cos \phi}{\sin \phi} \qquad 4)$$

remembering that in this case $N = 2 \pi \rho \, n \, v \, \sin \alpha$. Expanding the terms cos ø and sin ø by the equations of Chapter II we have

$$T_b = \frac{p \sqrt{\left(\rho_o{}^2 - \rho_m{}^2\right)^2 - \left(\rho_m{}^2 - \rho^2\right) e^{2\int_\rho^{\rho_o} \frac{\cot^2 \alpha}{\rho} d\rho}}}{2 \, e^{\int_\rho^{\rho_o} \frac{\cot^2 \alpha}{\rho} d\rho}} \qquad 5)$$

as the bead ring tension in a tire of any cord path under the restricting condition that we will now describe.

It will be recalled that the equations of tire contour shape and curvature were derived for a surface of equilibrium between the tension in its cords and the inflation pressure. It is quite apparent that when, in the construction of a tire, the edges of the several plies are anchored to an inextensible steel ring by folding them around the ring and extending the fold to a diameter larger than that of the ring itself, a comparatively rigid structure is formed by the combination of steel anchor ring and plies of rubberized fabric.

If this inflexible structure were placed with its neutral contour coinciding with the neutral contour of the flexible tire 300, as in Fig. 4, equations 4) or 5) would define the tension in the steel anchor ring exactly.

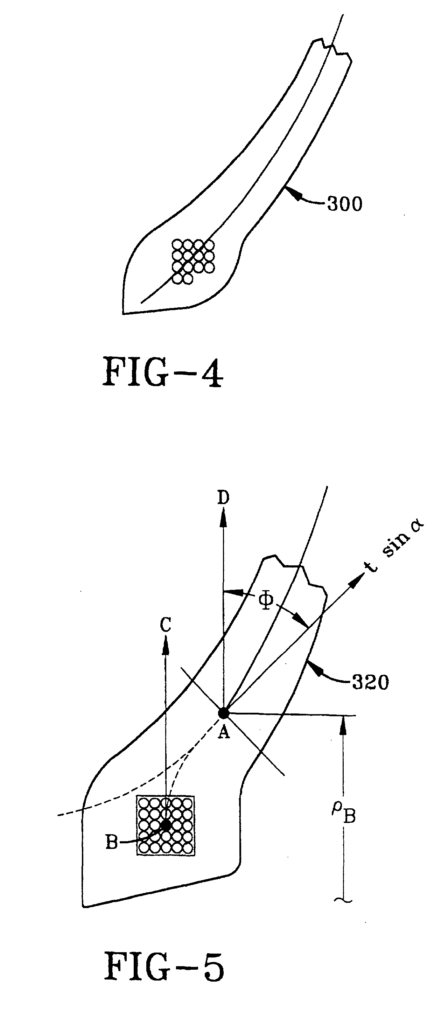

In most tires 320, however, the rigid structure of steel ring and surrounding rubberized cord material is shaped as in Fig. 5, and the neutral contour of the flexible tire 320 comes no where near the steel ring or the neutral contour of the rigid structure around it.

In this case if the cord pull is to be defined by equations 2) or 3) it will have to be defined at A where the flexible contour joins the rigid structure known in rubber-shop English as the tire "bead." The force along AD

$$t \, n \, v \, \sin^2 \alpha \cos \phi$$

in the type of bead tends to turn the structure about an axis through some point near B. An actual torsion does occur in many cases, but whether it does or not there are stresses in the bead structure that have presented persistent problems to the designer. As for tension in the steel anchor ring, equations 3) or 4) when computed at point A were not very reliable tensions in the steel ring at B. Instead of the component of cord pulls $t \, n \, v \, \sin^2 \alpha \cos \phi$ consider the component t $\sin \alpha$ as being transmitted over the arc AB to exert force BC on the steel ring in its own plane. We would then rewrite 4) as

$$T_b = \frac{p \, (\rho_m{}^2 - \rho_b{}^2) \cdot k}{2 \sin \phi_b} \qquad 6)$$

as the tension in the ring at B, and where k is a factor that will correct for the manner in which the forces t $\sin \alpha$ are transmitted from A to B."

Generation of this true neutral ply line curve is done numerically within a Computer Aided Drawing (CAD) program. At point YS, the curve is tangent to a circular arc extending from point RC to YS.

<u>SPECIFYING THE NEUTRAL CONTOUR LINE</u> is accomplished using the following steps:

1.      Determine the RC point by

$$RC = OD/2 - TO$$

where

$$TO = 1.04*NSK + UT + BGA + TPC$$

2.      Determine YM by subtracting required sidewall gage (SWGA) from SD/2.

3.      In order to determine the RB,YB point the bead position must be established. The lateral position of the bead bundle is determined by first offsetting the upper portion of the mold ring in-board and parallel an amount BMG (equal to the sum of the gages of the gum chafer, fabric chafer, chipper, ply and flipper). The lower right-hand vertex of the bead wire bundle is then positioned axially on this line.

4.      For determination of RB,YB, the upper portion of the mold ring is offset outboard and parallel 0.5". From the intersection of the mold sharp diameter line and this offset line, a line is drawn at 135 degrees to the horizontal. A vertical line is drawn through the center of the bead bundle. The intersection of the vertical line and the 135 degree line is the RB,YB point.

5.      A neutral contour line may now be constructed with an estimate of the PR such that the YS point (edge of the constant radius PR) falls between 80-85 % of dimension WBA, where WBA is the width of the belt covering the "wedge". Further estimates of PR may be used in an iterative fashion until the target YS is attained.

<u>REVISING THE UPPER PLY CONTOUR LINE</u>

The neutral contour from the C/L to the shoulder is revised in order to provide uniform rubber gage between the split #1 belts. This standardizes the insert for plant efficiency.

<u>REVISING THE LOWER PLY CONTOUR LINE</u>

While it is desirable to have the ply line follow the neutral contour line, in practice the steep approach angle (from the vertical) prevents the curing bladder from providing enough pressure to form the contour. Thus, the lower ply line is revised in the following manner:

A point X (see Fig. 2) on the mold surface is located at the intersection of the heel radius and the mold ring ledge. The ply ending 26 lies on a circular arc of radius PEH (centered at X) and is located a distance T2 from the mold surface (obtained by the intersection of the off-set mold surface and the PEH circle arc). Point E is then established on the inboard side of the ply ending 26 and a circle of radius T1 is then drawn to establish the distance to the ply 24 (see note 3).

Note that at this point the appropriate ply gage and flipper gages have been laid in on the inboard side of the bead as concentric circular arcs. A spline 70 is then drawn through the YM point (point A), tangent to the circle centered at E (point B), and tangent to the ply circle (point D) on the inboard side of the bead (dashed line).

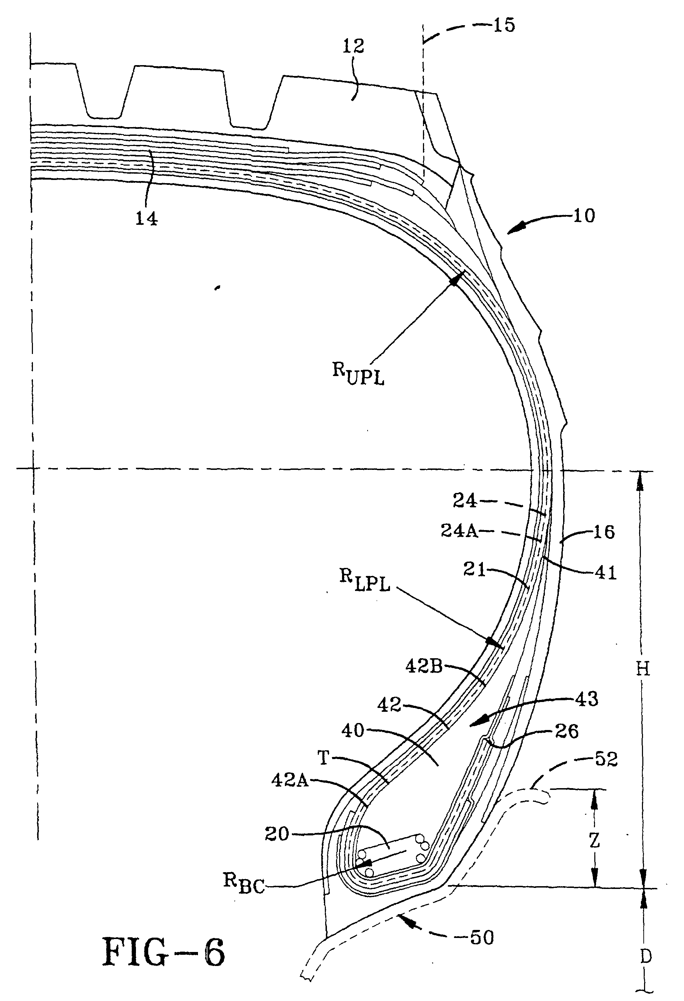

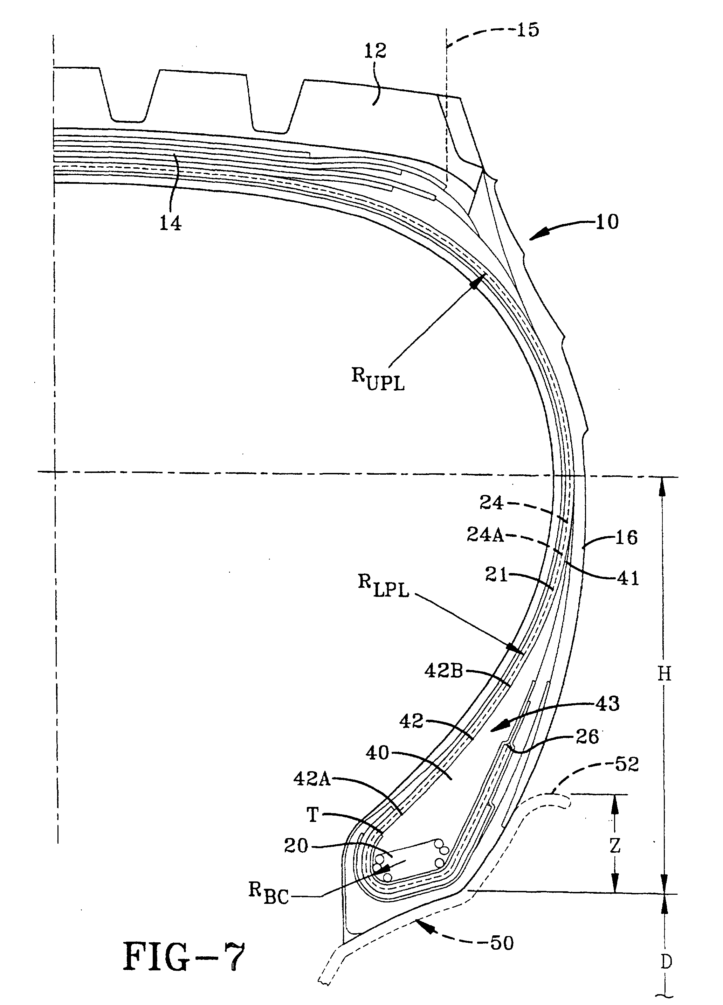

With the reference to Figs. 6, 7 and 8, the use of a precured contoured apex 40 provides a surface 42 that maintain its profile during the vulcanization process.

By profiling the contour 42 of a precured apex 40 with a convex surface 42A axially inward of the bead core 20 and extending to a radial location T, location T being at or below radial height Z of the rim flange 52 of the design rim 50 that the tire 10 is to be mounted to, the contour 42 has an inflection point or short spline line at T wherein the axially inner surface becomes concave 42B, the concave surface 42B extending from the inflection point T to the radially outer end 41 of the apex 40, the radially outer end 41 being at or preferably slightly below the radial location H of the maximum section width SW of the tire 10.

When T is constructed as a short spline one preferred approximation of the spline T is established as a line tangent to the circular arc established by the $R_{LPL}$ radius and tangent to the circular arc adjacent the bead core 20. The average length of the spline T must be at or below the radial location Z of the rim flange Z. This insures that although a spline is used it must be very short in length and thus limits the amount of deviation from the optimal neutral contour line. From a geometric fit relationship as the $R_{LPL}/R_{UPL}$ ratio increases greater than 1.0, then the length of the spline T decreases to a point wherein the tangency of the circular arcs is a point T. Importantly, the location T, whether a point or the midpoint of the spline, must lie below the rim flange 52.

As can be seen from Figs. 6, 7 and 8, the ply cord's lower path 24 below the maximum section width is dictated by the overall contour of the precured apex 40. The ply line 24A in the upper shoulder region has a single radius of curvature $R_{UPL}$, $R_{UPL}$ extending from below the belt 14 near the belt edges 15 to the maximum section width SW at the section width diameter SD. Near that location the curvature of the ply line transitions to a second lower radius of curvature $R_{LPL}$, $R_{LPL}$ is greater than or equal to $R_{UPL}$, preferably about 100% to 250% the radius $R_{UPL}$, more preferably about 125% to 200% $R_{UPL}$.

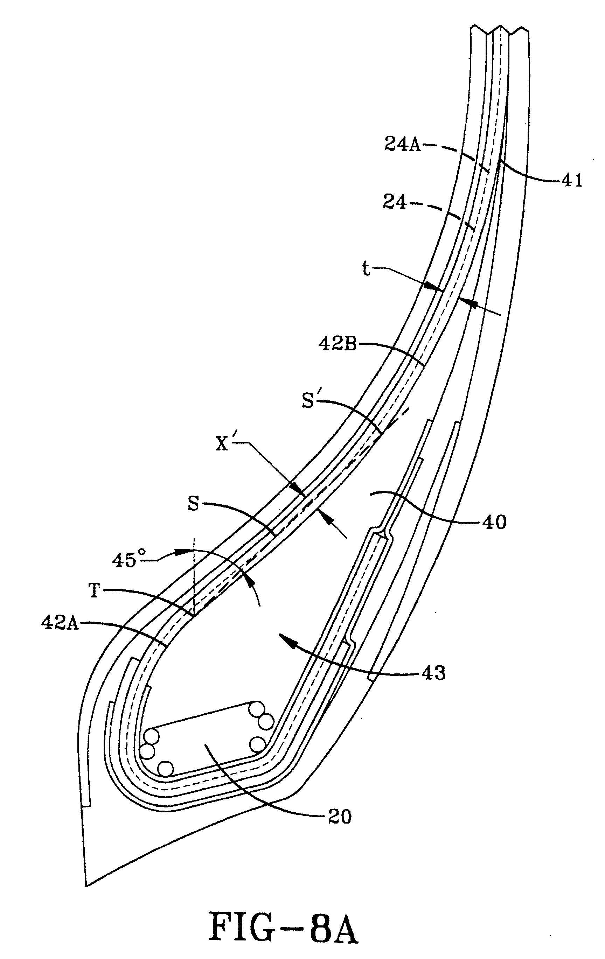

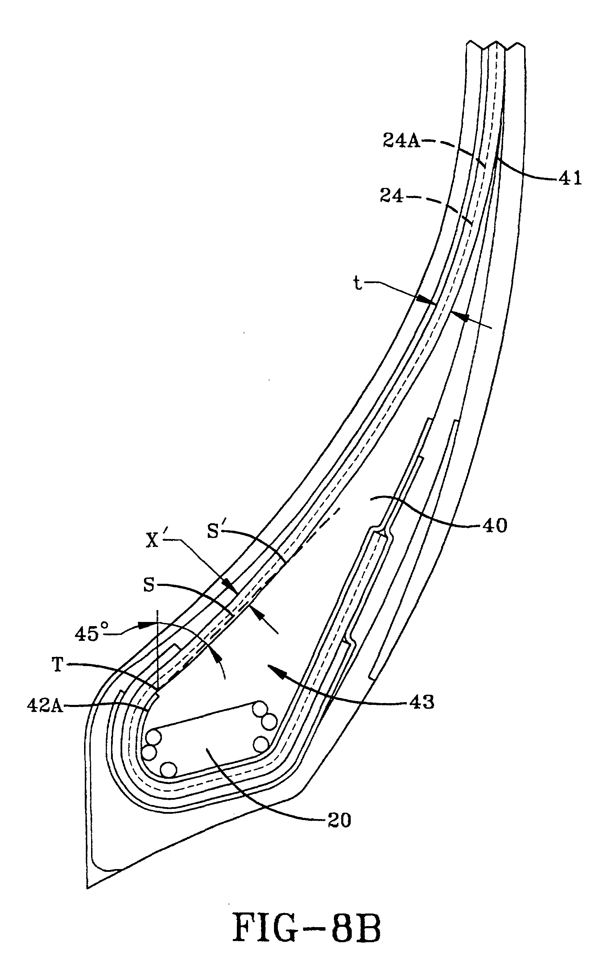

As shown in Fig. 8A and 8B assuming one draws a line S tangent to the convex surface 42A of the precured apex 42 at an angle of 45° relative to the radial direction and then extends that line to intersection point $S^1$ on the axially inner concave surface 42B, the extension of line S will cover or extend between 50% and 100% of the precured apex 40 length lying below the intersection point $S^1$. The maximum distance $X^1$ between T and the $S^1$ between the line S and the ply line path 24 will be at least 1.0, preferably at least 2 times the thickness of the ply gauge (t).

The resultant tire 10 exhibits an approximately neutral contour to a radial location at or below the rim flange 52. This greatly reduces the shear stress of the cords and gives the tire 10 superior performance improvements. The fact that the deviation from the optimal ply path 24 occurs at a point wherein the rigid rim flange 52 and the bead core 20 can cooperatively constrain the cords 21 means that the overall durability adjacent the bead cores 20 is not diminished while the internal shear stresses along the ply line 24 have been dramatically reduced. This means the hysteretic heat generation and the associated reduced bead durability, high rolling resistance problems common in radial tires 10 can be reliably and uniformly reduced.

The precured apex 40 is believed most efficiently manufactured using injection molding however, compression molding of the apex can also achieve similar benefits as described above.

As used herein the term precured apex means that rubber flow associated with the vulcanization process cannot appreciably occur. Thus the term precured can also encompass partially cured rubber apex as long as the contour profile 42 can be maintained to provide the ply line 24A shape.

By using the contoured precured apex 40 which keeps its shape during molding the tire 10 as the adjacent green or unvulcanized components initiate the flowing cure state and as the tire cures and "sets-up" the ply path is fixed by the apex in combination with the mold.

It is believed best that the bead core 20 should be inserted into the apex forming mold to make a bead and precured apex assembly 43. This is naturally a method that further insures uniformity of these parts during tire assembly.

**Claims**

1.  A tire (10) mounted on a rim (50) of a vehicle, having a tread portion (12), a belt package (14) radially inward of the tread (12), a pair of sidewall portions (16) each extending radially inward from a lateral edge (15) of the belt package (14), a pair of beads (22) each having an annular bead core (20) and positioned radially inward of a respective sidewall portion (16), at least one carcass ply (24) located radially inward of the belt package (14) and extending from bead (22) to bead (22), the at least one carcass ply (24) having radially extending parallel cords (24A) and a pair of turnup ends (26), one turnup end (26) being wrapped about each bead core (20) and extending radially outwardly to an end point positioned radially outwardly of a flange (52) of the rim (50), and a pair of precured bead fillers (40), one precured bead filler portion being adjacent to a radially outer surface of the bead core (20), each precured bead filler (40) having an inner curvature (42), the inner curvature (42) defined by a convex surface (42A) and a concave surface (42B), the convex surface (42A) radially outwardly extending from axially inwardly of the bead core (20) to an inflection location T, **characterized by** location T being substantially radially inward of a radially outer surface of the rim flange (52), the concave surface (42B) extending from the location T to a radially outer end (41) located at or slightly below the radial location H of a maximum section width (SW) of the tire (10), the inner curvature (42) of the bead filler establishing a cord path of the carcass ply (24) when the tire (10) is normally inflated and unloaded, the cord path extending from radially above the rim flange (52) to the lateral ends (15) of the belt package (14), the carcass ply cord path having a first radius of curvature $R_{UPL}$ between the belt lateral ends (15) to the radial location H of the maximum section width (SW) and a second radius of curvature $R_{LPL}$ in the range of 150% to 200% $R_{UPL}$ between the location H and the location T, the carcass ply cord path below the maximum section width (SW) being dictated by the overall contour of the inner curvature (42) of the bead filler (40) and wherein by drawing a line (S) tangent to the convex surface (42A) of the precured bead filler (42) at an angle of 45° relative to the radial direction and then extending that line to intersection point ($S^1$) on the axially inner concave surface (42B), the extension of said line (S) will cover between 50% and 100% of the precured bead filler length lying below the intersection point ($S^1$).

**2.** The tire (10) of claim 1 wherein the location T is defined by a line having its midpoint below the radially outer surface ofthe rim flange (52), the line being a tangent line, tangent to the second radius of curvature $R_{LPL}$ and the convex surface (42A).

**3.** The tire (10) of claim 1 wherein the location T is a point.

**Patentansprüche**

**1.** Reifen (10), der auf eine Felge (50) eines Fahrzeugs aufgezogen ist, mit einem Laufstreifenabschnitt (12), einem Gürtelpaket (14) radial innerhalb des Laufstreifens (12), zwei Seitenwandabschnitten (16), die sich jeweils von einer Seitenkante (15) des Gürtelpakets (14) radial nach innen erstrecken, zwei Wülsten (22), die jeweils einen ringförmigen Wulstkern (20) aufweisen und radial innerhalb eines jeweiligen Seitenwandabschnitts (16) angeordnet sind, mindestens einer Karkasslage (24), die radial innerhalb des Gürtelpakets (14) angeordnet ist und sich von Wulst (22) zu Wulst (22) erstreckt, wobei die mindestens eine Karkasslage (24) sich radial erstreckende, parallele Korde (24A) und zwei Umschlagenden (26) aufweist, wobei ein Umschlagende (26) um jeden Wulstkern (20) herumgewickelt ist und sich radial nach außen bis zu einem Endpunkt erstreckt, der radial außerhalb eines Horns (52) der Felge (50) angeordnet ist, und zwei vorvulkanisierten Wulstkeilen (40), wobei ein vorvulkanisierter Wulstkeilabschnitt neben einer radial äußeren Oberfläche des Wulstkerns (20) liegt, wobei jeder vorvulkanisierte Wulstkeil (40) eine innere Krümmung (42) aufweist, wobei die innere Krümmung (42) durch eine konvexe Oberfläche (42A) und eine konkave Oberfläche (42B) definiert ist, wobei sich die konvexe Oberfläche (42A) von axial innerhalb des Wulstkerns (20) zu einer Wendestelle T radial nach außen erstreckt, **dadurch gekennzeichnet, daß** die Stelle T im wesentlichen radial innerhalb einer radial äußeren Oberfläche des Felgenhorns (52) liegt, die konkave Oberfläche (42B) sich von der Stelle T zu einem radial äußeren Ende (41) erstreckt, das bei oder geringfügig unter der radialen Stelle H einer maximalen Querschnittsbreite (SW) des Reifens (10) angeordnet ist, die innere Krümmung (42) des Wulstkeils einen Kordverlauf der Karkasslage (24) festlegt, wenn der Reifen (10) normal aufgepumpt und unbelastet ist, der Kordverlauf sich von radial über dem Felgenhorn (52) bis zu den seitlichen Enden (15) des Gürtelpakets (14) erstreckt, der Karkasslagen-Kordverlauf einen ersten Krümmungsradius $R_{UPL}$ zwischen den seitlichen Enden (15) des Gürtels bis zur radialen Stelle H der maximalen Querschnittsbreite (SW) und einen zweiten Krümmungsradius $R_{LPL}$ im Bereich von 150 % bis 200 % $R_{UPL}$ zwischen der Stelle H und der Stelle T aufweist, der Karkasslagen-Kordverlauf unter der maximalen Querschnittsbreite (SW) durch die Gesamtkontur der inneren Krümmung (42) des Wulstkeils (40) vorgeschrieben ist und wobei durch Ziehen einer Linie (S) tangential zur konvexen Oberfläche (42A) des vorvulkanisierten Wulstkeils (42) unter einem Winkel von 45° relativ zur radialen Richtung und dann Verlängern dieser Linie zu einem Schnittpunkt (S') auf der axial inneren konkaven Oberfläche (42B) die Verlängerung der Linie (S) zwischen 50 % und 100 % der Länge des vorvulkanisierten Wulstkeils, die unter dem Schnittpunkt (S') liegt, abdecken wird.

**2.** Reifen (10) nach Anspruch 1, wobei die Stelle T durch eine Linie definiert ist, deren Mittelpunkt unter der radial äußeren Oberfläche des Felgenhorns (52) liegt, wobei die Linie eine tangentiale Linie ist, die tangential zum zweiten Krümmungsradius $R_{LPL}$ und der konvexen Oberfläche (42A) liegt.

**3.** Reifen (10) nach Anspruch 1, wobei die Stelle T ein Punkt ist.

**Revendications**

**1.** Bandage pneumatique (10) monté sur une jante (50) d'un véhicule, possédant une portion de bande de roulement (12), un paquet de ceintures (14) à l'intérieur de la bande de roulement (12) en direction radiale, une paire de portions de flancs (16) s'étendant chacun à l'intérieur en direction radiale d'un bord latéral (15) du paquet de ceintures (14), une paire de talons (22) possédant chacun une tringle de talon annulaire (20) et positionné à l'intérieur d'une portion de flanc respective (16) en direction radiale, au moins une nappe de carcasse 24 disposée à l'intérieur du paquet de ceintures (14) en direction radiale et s'étendant d'un talon (22) à l'autre talon (22), ladite ou lesdites nappes de carcasse (24) possédant des câblés parallèles (24A) s'étendant en direction radiale et une paire d'extrémités de retournement (26), une extrémité de retournement (26) entourant chaque tringle de talon (20) et s'étendant vers l'extérieur en direction radiale jusqu'à un endroit terminal positionné à l'extérieur d'une bride (52) de la jante (50) en direction radiale, et une paire de bourrage sur tringle (40) soumis à une vulcanisation préalable, une portion du bourrage sur tringle soumis à une vulcanisation préalable étant disposée en position adjacente à la surface externe de la tringle de talon (20) en direction radiale, et chaque bourrage sur tringle (40) soumis à une vulcanisation préalable possédant une courbure interne (42), la courbure interne (42) étant définie par une surface convexe (42A) et par une surface concave (42B), la surface convexe (42) s'étendant vers l'extérieur en direction radiale depuis un endroit situé à l'intérieur de la tringle de talon (20) en direction radiale jusqu'à un endroit d'infléchissement T, **caractérisé par le fait que** l'endroit T est disposé essentiellement à l'intérieur en direction radiale de la surface externe du rebord de jante (52) en direction radiale, la surface concave (42B) s'étend depuis l'endroit T jusqu'à une extrémité externe (41) en direction radiale situé à l'endroit radial H de la grosseur de boudin maximale (SW) du bandage pneumatique (10) ou légèrement en dessous de cet endroit, la courbure interne (42) du bourrage sur tringle établit un profil suivi par le câblé dans la nappe de carcasse (24) lorsque le bandage pneumatique (10) est normalement gonflé et ne se trouve pas sous charge, le profil suivi par le câblé s'étendant depuis un endroit situé au-dessus du rebord de jante (52) en direction radiale jusqu'aux extrémités latérales (15) du paquet de ceintures (14), le profil suivi par le câblé de la nappe de carcasse possède un premier rayon de courbure RUPL entre les extrémités latérales de ceintures (15) jusqu'à l'endroit radial H de la grosseur du boudin maximale (SW) et un deuxième rayon de courbure RLPL dans le domaine de 150 % à 200 % de RUPL entre l'endroit H et l'endroit T, le profil suivi par le câblé de la nappe de carcasse en dessous de la grosseur du boudin maximale (SW) étant dicté par le contour global de la courbure interne (42) du bourrage sur tringle (40), et dans lequel, en traçant une ligne (S) tangente à la surface convexe (42A) du bourrage sur tringle (42) soumis à une vulcanisation préalable en formant un angle de 45° par rapport à la direction radiale et en prolongeant ensuite cette ligne jusqu'au point d'intersection (S1) sur la surface concave interne (42B) en direction axiale, on obtient un prolongement de ladite ligne (S) qui recouvre entre 50 % et 100 % de la longueur du bourrage sur tringle soumis à une vulcanisation préalable, située en dessous du point d'intersection (S1).

2. Bandage pneumatique (10) selon la revendication 1, dans lequel l'endroit T est défini par une ligne dont le milieu est situé en dessous de la surface externe du rebord de jante (52) en direction radiale, la ligne étant une ligne tangente au deuxième rayon de courbure RLPL et à la surface convexe (42A).

3. Bandage pneumatique (10) selon la revendication 1, dans lequel l'endroit T est un point.

FIG-1

FIG-2

FIG-3
PRIOR ART

FIG-4

FIG-5

FIG-6

FIG-7

FIG-8A

FIG-8B